# EUROPÄISCHE PATENTSCHRIFT

(11) **EP 1 607 168 B1**
(45) Veröffentlichungstag und Bekanntmachung des Hinweises auf die Patenterteilung: **09.01.2013**
(21) Anmeldenummer: 05008216.3
(22) Anmeldetag: 14.04.2005
(51) Int. Cl.: B23K 35/38, B23K 9/32

(54) **Schutzgas-Versorgungseinrichtung zum Lichtbogen-Fügen**
Shield gas distribution system for arc welding
Dispositif de distribution de gaz de protection pour le soudage à l'arc

(30) Priorität: 29.04.2004 DE 102004021065
(43) Veröffentlichungstag der Anmeldung: 21.12.2005
(73) Patentinhaber: Linde AG, 80331 München (DE)
(72) Erfinder: Ammann, Thomas, 81379 München (DE)
(74) Vertreter: Kasseckert, Rainer

(56) Entgegenhaltungen:
- EP-A- 1 321 217
- GB-A- 736 241
- US-A- 4 749 841
- PATENT ABSTRACTS OF JAPAN Bd. 015, Nr. 215 (M-1119), 31. Mai 1991 (1991-05-31) & JP 03 060868 A (KOMATSU LTD), 15. März 1991 (1991-03-15)

## Beschreibung

Die Erfindung betrifft eine Schutzgas-Versorgungseinrichtung zur Vor-Ort-Versorgung von Arbeitsplätzen umfassend einen Flüssig-Argon-Speicher, einen Helium-Vorrat und einen Dotiergasvormischung-Vorrat, wobei der Flüssig-Argon-Speicher über Leitungen mit mindestens einem Arbeitsplatz verbunden ist.

Unter Lichtbogen-Fügen fällt sowohl das schon lange bekannte Schweißen mit Lichtbogen als auch das in jüngster Zeit an Bedeutung gewinnende Löten mit Lichtbogen unter Schutzgas. Des Weiteren gehört zum Lichtbogen-Fügen auch das Verbinden von artverschiedenen Werkstoffen, bei welchem ein Werkstoff aufgeschmolzen wird, während der andere nur erwärmt wird.

Beim Lichtbogenschweißen unter Schutzgas stellen inerte Gase den überwiegenden Anteil im Schutzgas. Das beim Schutzgasschweißen am häufigsten eingesetzte Inertgas ist Argon. Durch Zugabe von Helium in Argon wird die Wärmebilanz des Schutzgases im Lichtbogen und in der Schmelze verbessert, wodurch werkstoffabhängig ein tieferer Einbrand, eine bessere Entgasung und eine bessere Benetzung erreicht wird. Dadurch werden mit Helium höhere Schweißgeschwindigkeiten erzielt. Beim Schweißen von Nickelbasiswerkstoffen und auch bei Cr-Ni-Stählen verbessert oft eine Zugabe von Wasserstoff das Schweißergebnis. Auch eine Zugabe von Stickstoff oder einer Stickstoff-Wasserstoffmischung zu Argon oder Argon-Helium-Mischungen führt in verschieden Fällen zu der erwünschten Verbesserung. So ist eine Stickstoffzugabe oftmals bei Vorliegen eines austenitischen Werkstoffgefüges von Vorteil. Jedoch treten beim Schweißen oder Löten von Werkstoffen mit inert-reduzierenden oder inert-reaktionsträgen Gasmischungen trotz einer auf die Schweißaufgabe ausgerichteten Auswahl der Gasmischung oft Prozessstörungen auf. Um diese zu beseitigen, werden den inert-reduzierenden oder inert-reaktionsträgen Gasmischungen kleine Mengen an aktiven Gasen zugesetzt, die Gasmischungen werden dotiert. Die Dotierung erfolgt im Bereich von unter einem Prozent, dem sog. vpm Bereich. Gut bekannt ist beispielsweise das Dotieren von Inertgasen mit CO₂, O₂, NO oder N₂ zum Schweißen von Aluminiumwerkstoffe. Eine Dotierung des Schweißschutzgases mit CO₂ oder O₂ für Nickel-Basis-Werkstoffe ist in der EP 544 187 beinhaltet. Auch beim Lichtbogen-Löten ist eine Dotierung mit CO₂ oder O₂ bekannt und in der EP 1 101 559 beschrieben. Die Verwendung einer dotierten wasserstoffhaltigen Gasmischung beinhaltet die EP 639 627. Dotierte stickstoffhaltige Gasmischungen zum Lichtbogenschweißen beinhaltet die WO 02/47859. Durch die Beimischung eines Dotiergases verbessert sich die Lichtbogenstabilität und auch das Nahtaussehen wird qualitativ hochwertig. Eine unerwünschte Oxidation des Werkstücks wird jedoch vermieden.

Zusammenfassend ist zu sagen, dass nur dann sehr gute Schweißergebnisse erzielt werden können, wenn eine auf die vorliegende Schweißaufgabe hin optimierte Schutzgasmischung verwendet wird. Die Zusammensetzung der Schutzgasmischung ist dabei exakt auf Werkstoff, Beschaffenheit des Schweißgutes, Lichtbogenstabilität und Schweißgeschwindigkeit abgestimmt. Deshalb gibt es eine Vielzahl verschiedener Schutzgasmischungen.

Um nun auch die optimale Schutzgasmischung benutzen zu können, muss diese in ausreichend großer Menge der Schweißvorrichtung zur Verfügung stehen. Normalerweise wird eine Schutzgasmischung mit mehreren Komponenten beim Gaselieferanten bereits fertig gemischt und in Gasflaschen zum Gasverbraucher geliefert. Der Gasverbraucher kann dann die fertige Gasmischung ohne weitere Arbeitsschritte verwenden. Von Nachteil sind dabei die großen Gasmengen, welche zum Gasverbraucher geliefert werden müssen. Dies ist vor allem bei einem hohen Gasverbrauch aufwändig durchzuführen. Da sich durch Verflüssigung das Volumen des Argons um ein vielfaches reduziert, werden große Gasmengen normalerweise flüssig geliefert und aufbewahrt. Die benötigte Gasmenge wird in Form von verdampfter Flüssigkeit entnommen. Deshalb besitzen Großverbraucher in der Regel eine Flüssig-Argon-Vorsorgung. Fertige Gasmischung sind folglich für den Großverbraucher - vor allem im Vergleich zur Flüssig-Argon-Versorgung - umständlich in ihrer Handhabung.

Eine andere Möglichkeit für den Gasverbraucher, die gewünschte Schutzgasmischung zu erhalten, ist es, diese selbst vor Ort zu mischen. Als Nachteil der Mischtechniken vor Ort ist festzustellen, dass die Herstellung von Mehr-Komponenten-Mischungen sehr komplex und schwierig ist, und deshalb häufig Gasmischungen mit fehlerhaften Volumenanteilen hergestellt werden, welche zu mangelhaften Schweißergebnissen führen. Für den Fall, dass der Gasverbraucher Gasmischungen mit Volumenanteilen von unterhalb einem Prozentpunkt, wozu ja dotierte Schutzgasmischungen zu zählen sind, benötigt, können diese Mischungen mit handelsüblichen Mischern nicht hergestellt werden, da mit handelsüblichen Mischern nur Mischungen mit einem Volumenanteil der Komponenten von mindestens einem Prozent hergestellt werden können. Dotiergasmischungen können hingegen nur mit Präzisionsmischern hergestellt werden, die den Sonderteilen zuzuordnen und sehr teuer sind. Zudem sind Präzisionsmischer sehr fehleranfällig.

Die EP 0 020 174 beinhaltet ein Verfahren zum Mischen von Gasen mit unterschiedlicher Wärmeleitfähigkeit. Mit diesem Verfahren ist es möglich, eine dotierte Schutzgasmischung herzustellen. Die dort beschriebene Mischtechnik ermöglicht es, in einer Mischung auch Volumenanteile von wenigen Prozentpunkten exakt bereitzustellen.

Die EP 1 321 217 gibt ein Verfahren zur Herstellung einer dotierten Schutzgasmischung aus flüssigem Argon und einer Gasvormischung an. Dabei wird das flüssige Argon verdampft und das gasförmige Argon mit der Gasvormischung bestehend aus dem Dotiergas, das in der Gasvormischung in entsprechend höherer Konzentration als in der fertigen Schutzgasmischung vorliegt, sowie Helium und/oder Argon vermischt.

Die JP 03060868 offenbart eine Verfahren zur Herstellung einer Schutzgasmischung zum Lichtbogenschweißen, bei welchem die Schutzgasmischung vor Ort mit Hilfe von mehreren Gasflaschen gemischt wird.

Die Bereitstellung von auf die vorliegende Schweiß- oder Lötaufgabe abgestimmten Schutzgasmischungen in großen Mengen ist jedoch technisch und in praktischer Durchführung nicht zufriedenstellend gelöst. Insbesondere existiert kein einfaches und unkompliziertes Verfahren, das eine Verwendung von Argon aus einer Flüssig-Argon-Versorgung ermöglicht und zu der speziellen, dotierten Schutzgasmischung führt.

Der Erfindung liegt daher die Aufgabe zugrunde, eine Schutzgas-Versorgungseinrichtung zur Vor-Ort-Versorgung von Arbeitsplätzen anzugeben, welche die vorgenannten Probleme löst und welche sich insbesondere durch eine hohe Flexibilität auszeichnet.

Die Aufgabe wird durch eine Schutzgas-Versorgungseinrichtung gemäß Anspruch 1 gelöst.

Durch das getrennte Zur-Verfügung-Stehen der Komponenten wird es möglich, neben der fertigen Schutzgasmischung auch einzelne Komponenten und Zwischenprodukte zu nutzen. So können ausgewählte Arbeitsplätze mit gasförmigem Argon direkt aus der Flüssig-Argon-Versorgung und eine weitere Gruppe von Arbeitsplätzen mit einer Argon-Helium-Mischung, welche durch Zusammenmischung von verdampften Argon und Helium gewonnen wird, versorgt werden. Eine dritte Gruppe an Arbeitsplätzen wird schließlich mit der fertigen Schutzgasmischung aus verdampften Argon, Helium und Dotiergasvormischung versorgt. Ferner ist es auch möglich Arbeitsplätze mit einer Gasmischung aus verdampftem Argon und der Dotiergasvormischung zu versorgen. Diese Flexibilität bei der Herstellung von Schutzgasmischungen vor Ort bietet nur die Erfindung. Damit wird es möglich, für jeden Arbeitsplatz und für jede Schweißaufgabe die optimierte Schutzgasmischung bereitzustellen. Da ferner bei dieser Erfindung das Argon, welches mengenmäßig der größten Anteil hat, der Flüssig-Argon-Versorgung entnommen wird, können alle Vorteile, die eine Flüssig-Argon-Versorgung bietet, genutzt werden. Ferner werden bei vorhandener Flüssig-Argon-Versorgung lediglich Mischer benötigt, um eine optimale Schweißschutzgasmischung zu erhalten. Als besonderer Vorteil ist hervorzuheben, dass zur Herstellung der Schutzgasmischung handelsübliche Zwei- oder Drei-Komponenten-Mischer genügen, obwohl die Schutzgasmischung eine Dotierung im vpm-Bereich aufweist. Dotierte Schutzgasmischungen sind normalerweise aufgrund der kleinen Zugabemenge an Dotiergas kritisch herzustellen. Da das Dotiergas Bestandteil einer Dotiergasvormischung ist, liegen die Mischungsverhältnisse, welche mit der Erfindung eingestellt werden müssen, im Prozentbereich und sind folglich mit handelsüblichen Mischern völlig unproblematisch einstellbar.

Vorteilhafterweise werden das Helium und die Dotiergasvormischung voneinander getrennt zugegeben. Mit dieser Vorgehensweise ist eine sehr hohe Flexibilität bei sehr geringem Aufwand gegeben. Wird - und diese Ausführungsvariante ist als bevorzugt anzusehen - zuerst das verdampfte Argon mit dem Helium und danach die Argon-Helium-Mischung mit der Dotiergasvormischung vermischt, steht als Schutzgas reines Argon, die Argon-Helium-Mischung und die dotierte Schutzgasmischung zur Verfügung Wird zuerst das Argon mit der Dotiergasvormischung und dann diese Mischung mit Helium vermengt, stehen als Schutzgas Argon, dotiertes Argon und die dotierte Argon-Helium-Mischung zur Verfügung. In einer weiteren Ausführungsvariante wird das Mischen von Argon, Helium und der Dotiergasvormischung in einem Drei-Komponenten-Mischer durchgeführt. Möglich ist es ferner, an ausgewählten Arbeitsplätzen Helium oder die Dotiergasvormischung jeweils separat zuzugeben und auf diese Weise verschiedene Heliumanteile oder verschiedene Konzentrationen an Dotiergas einzustellen. Der Anteil des Heliums beträgt in der fertigen Gasmischung vorteilhafterweise 5 bis 70 Vol.-%, bevorzugt 10 bis 50 Vol.-% und besonders bevorzugt 15 bis 30 Vol.-%. Mit allen Ausführungsvarianten wird vor Ort auf unkomplizierte Weise eine dotierte Schutzgasmischung erzeugt und zugleich ist mit der Erfindungeine sehr hohe Flexibilität vorhanden, die es ermöglicht, für die jeweilige Schweißaufgabe die optimale Schutzgaszusammensetzung zur Verfügung zu stellen. Eine hohe Flexibilität ist vor allem bei der Bereitstellung von Schutzgas für verschiedene Arbeitsplätze mit verschiedenen Schweißaufgaben von Vorteil. So sind in einem Werk oft Arbeitsplätze zu versorgen, die verschiedene Schweißaufgaben erfüllen und auch mit unterschiedlichen Schweißgeräten ausgestattet sind. So sind insbesondere an Arbeitsplätzen, an welchen Roboter die Schweißverbindung ausführen, dotierte Schutzgasmischungen von Vorteil, während an Arbeitsplätzen, an welchen von Hand geschweißt wird, oft Argon als Schutzgas bevorzugt wird. Neben diesem Kriterium beeinflussen auch Werkstoff und Werkstückbeschaffenheit die Schutzgasauswahl.

In einer anderen vorteilhaften Ausgestaltung werden das Helium und die Dotiergasvormischung mit einem Drei-Komponenten-Mischer zugegeben. Das Helium und die Dotiergasvormischung stehen auch in dieser Ausgestaltung der Erfindung vor Ort getrennt zur Verfügung. Zur Herstellung der dotierten Schutzgasmischung genügt ein einziger, handelsüblicher Mischer. Ein Präzisionsmischer ist dazu nicht notwendig. Damit wird es auf sehr einfache Weise möglich, Arbeitsplätze mit verdampftem Argon und andere Arbeitsplätze mit der dotierten Schutzgasmischung zu versorgen.

Mit besonderen Vorteilen werden mit der Dotiergasvormischung der Schutzgasmischung das Dotiergas und mindestens eine weitere Komponente zugegeben. Mit der Erfindung entsteht so auf einfache Art eine mehrkomponentige, dotierte Schutzgasmischung, wobei für die Volumenanteile eine sehr hohe Flexibilität gegeben ist. Die fertige Schutzgasmischung enthält die weitere Komponente mit einem Volumenanteil von 1 bis 8 Vol.-%, vorzugsweise von 1,5 bis 5 Vol.-%, besonders bevorzugt von 1,8 bis 3 Vol.-%.

Als weitere Komponente wird vorteilhafterweise Wasserstoff und/oder Stickstoff verwendet. Damit werden die besonders vorteilhaften dotierten Schutzgasmischungen aus Helium, Argon und Wasserstoff beziehungsweise Stickstoff hergestellt.

In einer vorteilhaften Ausgestaltung wird als Dotiergas ein Gas oder ein Gemisch aus den Gasen NO, N₂, O₂ oder CO₂ verwendet. Mit diesen Dotiergasen werden besonders gute Schweiß- und Lötergebnisse erzielt.

Mit Vorteil wird eine Dotiergasvormischung verwendet, die das Dotiergas mit einer Konzentration von 0,005 bis 10 Vol.-%, vorzugsweise von 0,1 bis 5 Vol.-%, besonders bevorzugt von 1 bis 3 Vol.-% enthält. Mit diesen Konzentrationen in der Dotiergasvormischung werden fertige Schutzgasmischungen mit den gewünschten Dotiergaskonzentrationen hergestellt. Die Konzentrationen den Dotiergases liegen in der fertigen Schutzgasmischung im Bereich von 10 bis 10000 vpm, bevorzugt im Bereich von 50 bis 1000 vpm.

In vorteilhafter Ausgestaltung wird die Erfindung zur Herstellung von Schutzgasmischung für hochlegierte Werkstoffe und Nickel-Basiswerkstoffe verwendet. Beim Lichtbogen-Fügen dieser Werkstoffe sind dotierte, mehrkomponentige Schutzgasmischungen von besonderem Vorteil. Diese Schutzgasmischungen eignen sich insbesondere auch für Sonderstähle und korrosionsbeständige Stähle. Deshalb ist es besonders vorteilhaft, die Erfindung zu verwenden, wenn diese Werkstoffe verarbeitet werden.

Mit der Erfindung werden mindestens ein Arbeitsplatz ausschließlich mit verdampftem Argon und mindestens ein Arbeitsplatz mit der Schutzgasmischung versorgt. Damit werden die Vorteile bezüglich der Flexibilität ausgenützt.

Weiterhin wird vorteilhafterweise mindestens ein Arbeitsplatz mit einer Argon-Helium Mischung versorgt. Die Nutzung der Argon-Helium-Mischung ist ein wesentlicher Vorteil, der sich durch die erfindungsgemäße Schutzgas-Herstellung einstellt.

Für die Schutzgas-Versorgungseinrichtung wird die Aufgabe also dadurch gelöst, dass der Flüssig-Argon-Speicher (1) über mindestens einen Mischer (4, 5) enthaltende Zuführungen mit mindestens einem weiteren Arbeitsplatz (14, 15) verbunden ist, wobei der/die Mischer (4, 5) mit dem Flüssig-Argon-Speicher (1), dem Helium-Vorrat (2) und dem Dotiergasvormischung-Vorrat (3) verbunden ist/sind. Die erfindungsgemäße Schutzgas-Versorgungseinrichtung zeigt ihre vorgenannten Vorteile bei Arbeitsplätzen mit unterschiedlichen Schweißaufgaben. Vorteilhafterweise sind Speicher und Vorratsbehälter folgendermaßen ausgestaltet: ein Tank mit flüssigem Argon, ein oder zwei Bündel mit Helium und ein oder zwei Gasflaschen mit Dotiergasvormischung. Das doppelte Vorhandensein von Bündel und Flasche ermöglicht ein Weiterführen der Gasversorgung der Arbeitsplätze auch beim Austausch der Vorratsbehälter.

In einer vorteilhaften Ausgestaltung sind die den Mischer enthaltenden Zuführungen mit einem Drei-Komponenten-Mischer ausgestattet. In dieser Ausgestaltung ist es auf sehr einfache Weise möglich, Arbeitsplätze mit verdampftem Argon und andere Arbeitsplätze mit der dotierten Schutzgasmischung zu versehen.

In einer anderen vorteilhaften Ausgestaltung sind die den Mischer enthaltenden Zuführungen mit zwei Mischern (4, 5) ausgestattet, wobei die Einspeisungsseite des ersten Mischers (4) mit dem Flüssig-Argon-Speicher (1) und dem Helium-Vorrat (2) und die Entnahmeseite des ersten Mischers (4) mit mindestens einem weiteren Arbeitsplatz (11, 12, 13) und wobei die Einspeisungsseite des zweiten Mischers (5) mit der Entnahmeseite des ersten Mischers (4) und dem Dotiergasvormischung-Vorrat (3) und die Entnahmeseite des zweiten Mischers (5) mit mindestens einem weiteren Arbeitsplatz (14, 15) über Leitungen verbunden sind. Hier zeigt sich die hohe Flexibilität der erfindungsgemäßen Schutzgas-Versorgungseinrichtung. Es sind Arbeitsplätze an den Flüssig-Argon-Speicher angeschlossen und andere Arbeitsplätze erhalten eine Argon-Helium-Mischung und eine dritte Gruppe von Arbeitsplätzen erhält eine dotierte Schutzgasmischung.

Im Folgenden soll die Erfindung anhand von beispielhaften Ausgestaltungen und mit Hilfe der Figuren näher erläutert werden. Hierbei zeigt:

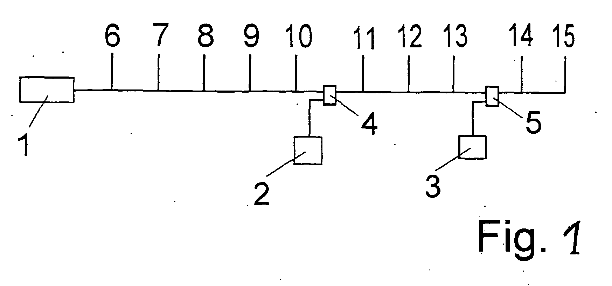

- Figur 1: eine beispielhafte Ausgestaltung der erfindungsgemäßen Vorrichtung in einer Werkhalle mit mehreren Arbeitsplätzen.

Figur 1 zeigt symbolisch einen Flüssig-Argon-Speicher 1, einen Helium-Vorrat 2, einen Dotiergasvormischung-Vorrat 3, zwei Mischer 4, 5 und Zuführungen zu zehn Arbeitsplätzen 6 bis 15. Das aus dem Flüssig-Argon-Speicher 1 entnommene gasförmige Argon wird den Arbeitsplätzen 4 bis 10 zugeführt. Ferner wird das gasförmige Argon an die Einspeisungsseite des Mischers 4 geführt. Auch der Helium-Vorrat 2 ist an der Einspeisungsseite des Mischers 4 angeschlossen. In dem Mischer entsteht nun die an den Arbeitsplätzen 11 bis 13 benötigte Argon-Helium-Mischung. Von der Entnahmeseite des Mischers 4 wird die Argon-Helium-Mischung zu den Arbeitsplätzen 11 bis 13 geleitet. Die Argon-Helium-Mischung wird auch in den zweiten Mischer 5 eingespeist. In den zweiten Mischer 5 wird auch die Dotiergasvormischung von dem Dotiergasvormischung-Vorrat 3 eingeleitet und Argon-Helium-Mischung und Dotiergasvormischung werden zu der an den Arbeitsplätzen 14 und 15 benötigten Schutzgasmischung vermischt. Vom Mischer 5 wird die fertige Schutzgasmischung an die Arbeitsplätze 14 und 15 geführt.

Mit der Erfindung hergestellte Gasmischungen sind beispielsweise mit Sauerstoff oder Kohlendioxid dotierte Argon-Helium-Mischungen, mit folgenden Volumenanteilen: 300 vpm Sauerstoff und 2 % Wasserstoff in 15 % oder 30 % Helium und restlich Argon oder 550 vpm Kohlendioxid und 2 % Wasserstoff in 30 % Helium und restlich Argon. Als Doterigasvormischungen werden beispielsweise 2,75 % Kohlendioxid in Wasserstoff oder 1,4 % Sauerstoff in Wasserstoff verwendet. Die fertigen Schutzgasmischungen sind zum Lichtbogen-Schweißen optimal, da mit diesen ein gutes Nahtaussehen, eine Oxidationsvermeidung, ein guter Einbrand, eine gute Entgasung und eine gute Benetzung bewirkt wird.

## Patentansprüche

1. Schutzgas-Versorgungseinrichtung zur Vor-Ort-Versorgung von Arbeitsplätzen (6-15) umfassend einen Flüssig-Argon-Speicher (1), einen Helium-Vorrat (2) und einen Dotiergasvormischung-Vorrat (3), wobei der Flüssig-Argon-Vorrat über Leitungen mit mindestens einem Arbeitsplatz (6-10) verbunden ist, **dadurch gekennzeichnet, dass** der Flüssig-Argon-Speicher (1) über mindestens einen Mischer (4, 5) enthaltende Zuführungen mit mindestens einem weiteren Arbeitsplatz (14, 15) verbunden ist, wobei der/die Mischer (4, 5) mit dem Flüssig-Argon-Speicher (1), dem Helium-Vorrat (2) und dem Dotiergasvormischung-Vorrat (3) verbunden ist/sind.

2. Schutzgas-Versorgungseinrichtung nach Anspruch 1, **dadurch gekennzeichnet, dass** die den Mischer enthaltenden Zuführungen mit einem Drei-Komponenten-Mischer ausgestattet sind.

3. Schutzgas-Versorgungseinrichtung nach Anspruch 1, **dadurch gekennzeichnet, dass** die den Mischer enthaltenden Zuführungen mit zwei Mischern (4, 5) ausgestattet sind, wobei die Einspeisungsseite des ersten Mischers (4) mit dem Flüssig-Argon-Speicher (1) und dem Helium-Vorrat (2) und die Entnahmeseite des ersten Mischers (4) mit mindestens einem weiteren Arbeitsplatz (11, 12, 13) und wobei die Einspeisungsseite des zweiten Mischers (5) mit der Entnahmeseite des ersten Mischers (4) und dem Dotiergasvormischung-Vorrat (3) und die Entnahmeseite des zweiten Mischers (5) mit mindestens einem weiteren Arbeitsplatz (14, 15) über Leitungen verbunden sind.

## Claims

1. Shielding gas supply device for providing an onsite supply to working stations (6-15), comprising a liquid-argon reservoir (1), a store of helium (2) and a store of premixed doping gas (3), the store of liquid argon being connected to at least one working station (6-10) via lines, **characterized in that** the liquid-argon reservoir (1) is connected to at least one further working station (14, 15) via feed lines containing at least one mixer (4, 5), the mixer(s) (4, 5) being connected to the liquid-argon reservoir (1), the store of helium (2) and the store of premixed doping gas (3).

2. Shielding gas supply device according to Claim 1, **characterized in that** the feed lines containing the mixer are provided with a three-component mixer.

3. Shielding gas supply device according to Claim 1, **characterized in that** the feed lines containing the mixer are provided with two mixers (4, 5), the feeding-in side of the first mixer (4) being connected to the liquid-argon reservoir (1) and the store of helium (2) and the removal side of the first mixer (4) being connected to at least one further working station (11, 12, 13) and the feeding-in side of the second mixer (5) being connected to the removal side of the first mixer (4) and the store of premixed doping gas (3) and the removal side of the second mixer (5) being connected to at least one further working station (14, 15) via lines.

## Revendications

1. Dispositif d'alimentation en gaz de protection pour l'alimentation sur place de postes de travail (6-15), comprenant un dispositif de stockage d'argon liquide (1), un réservoir d'hélium (2) et un réservoir de prémélange de gaz de dopage (3), le réservoir d'argon liquide étant connecté par le biais de conduites à au moins un poste de travail (6-10), **caractérisé en ce que** le dispositif de stockage d'argon liquide (1) est connecté par le biais de lignes d'apport contenant au moins un mélangeur (4, 5) à au moins un autre poste de travail (14, 15), le ou les mélangeurs (4, 5) étant connecté(s) au dispositif de stockage d'argon liquide (1), au réservoir d'hélium (2) et au réservoir de prémélange de gaz de dopage (3).

2. Dispositif d'alimentation en gaz de protection selon la revendication 1, **caractérisé en ce que** les lignes d'apport contenant le mélangeur sont munies d'un mélangeur à trois composants.

3. Dispositif d'alimentation en gaz de protection selon la revendication 1, **caractérisé en ce que** les lignes d'apport contenant le mélangeur sont munies de deux mélangeurs (4, 5), le côté d'injection du premier mélangeur (4) étant connecté au dispositif de stockage d'argon liquide (1) et au réservoir d'hélium (2) et le côté de prélèvement du premier mélangeur (4) étant connecté à au moins un autre poste de travail (11, 12, 13), et le côté d'injection du deuxième mélangeur (5) étant connecté au côté de prélèvement du premier mélangeur (4) et au réservoir de prémélange de gaz de dopage (3) et le côté de prélèvement du deuxième mélangeur (5) étant connecté à au moins un autre poste de travail (14, 15) par le biais de conduites.
